# EUROPÄISCHE PATENTANMELDUNG

(11) **EP 1 500 928 A1**
(43) Veröffentlichungstag der Anmeldung: **26.01.2005**
(21) Anmeldenummer: 04405450.0
(22) Anmeldetag: 14.07.2004
(51) Int. Cl.: G01N 27/90, B07C 5/34, G07C 3/14

(54) **Wirbelstrombasiertes Verfahren zur Qualitätsüberprüfung**

(30) Priorität: 23.07.2003 CH 12852003
(71) Anmelder: Ideacorp AG, 6331 Hünenberg (CH)
(72) Erfinder: Tüns, Heinz-Josef, 8447 Dachsen (CH)
(74) Vertreter: Bremi, Tobias, Dr.

(57) **Zusammenfassung**

Die vorliegende Erfindung betrifft ein Verfahren sowie eine Vorrichtung zur Aussonderung von mangelhaften Formlingen (4) aus elektrisch leitendem Material. Ein einfache und insbesondere sehr schnelle Aussonderung und damit Sicherung der Qualität der Formlinge insbesondere in Bezug auf Gefügefehler oder Spickel wird durch eine Wirbelstrommessung erreicht. Die Formlinge (2-4) werden dabei automatisch zugeführt, und sind als napfförmige Körper mit einem Boden ausgebildet. Diese Formlinge (2,3) werden einer berührungslosen Wirbelstrommessung bei wenigstens zwei Messfrequenzen unterzogen, wobei zur Wirbelstrommessung der napfförmige Körper (2-4) von seiner dem Boden zugewandten Seite her von wenigstens einem Wirbelstrommesskopf (17) umfasst wird, und wobei bei Über- resp. Unterschreitung einer Toleranzabweichung von Referenzwerten der gemessene Formling (2-4) ausgesondert wird. Alternativ ist es möglich, einen Wirbelstrommesskopf vorzusehen, welcher durch die dem Boden abgewandte Öffnung in den napfförmigen Körper (2-4) eindringt.

## Beschreibung

### TECHNISCHES GEBIET

Die vorliegende Erfindung betrifft ein Verfahren zur Aussonderung von mangelhaften Formlingen aus elektrisch leitendem Material. Ausserdem betrifft die vorliegende Erfindung eine Vorrichtung zur Durchführung eines derartigen Verfahrens.

### STAND DER TECHNIK

Vor allem in der Lebensmittelindustrie werden Behälter oft aus Aluminium in einem Umformprozess hergestellt. Derartige Behälter können zusätzlich mit Einlagen versehen werden, die die verschiedenartigsten Funktionen erfüllen können. Beispielsweise können Behälter, in denen feuchtigkeitsempfindliches Pulver enthalten ist, mit einer Einlage versehen sein, die die Feuchtigkeit absorbiert und das Pulver trocken hält. Andere Behälter, in denen Flüssigkeiten enthalten sind, können mit selbstabdichtenden Einlagen versehen sein, so dass trotz einer Beschädigung des Behälters ein Auslaufen des Inhalts verhindert wird. Andere Anwendungen bestehen darin, Einlagen vorzusehen, welche nach Aktivierung eine Substanz in den Hauptraum freisetzen, wie dies z.B. bei Kapseln oder Bechern für Trinkwasser der Fall sein könnte, in welche nach einem Anstechen o.ä. eine Desinfektionsflüssigkeit in kontrollierter Dosierung abgegeben wird.

Die Behälter werden aus einer Behältermaterialbahn, beispielsweise einem Aluminiumband, geformt. Sie werden aus einer Bahn ausgestanzt und anschliessend durch Umformen, wie beispielsweise Tiefziehen oder Blasformen, gefertigt. Die gegebenenfalls vorhandenen Einlagen werden aus einer bandförmigen Einlagenmaterialbahn herausgestanzt, bevor sie in die Behälter eingebracht werden.

In diesem Herstellungsprozess können, wie in beinahe jedem Herstellungsprozess mangelhafte Formlinge entstehen. Mängel können dabei einerseits in einem mangelhaften Gefüge bestehen, wobei es sich dabei einerseits um tatsächliche Risse in der Metallschicht handeln kann, oder aber auch um Schwachstellen, welche bei der geringsten Belastung aufbrechen können. Derartige Risse oder Schwachstellen (im Englischen oft als *flaws* bezeichnet) sind im Bereich von Behältern der Lebensmittelindustrie meist unerwünscht, da sie die Luftdichtigkeit gefährden können, und somit die Haltbarkeit der in den Behältern gehaltenen Produkte nicht gewährleistet ist. Andererseits können derartige Behälter einem häufig dem Befüllen nachgeschalteten Prozess in z. B. einem Gegendruckautoklav nicht standhalten, oder es können derartige Fehlstellen beispielsweise bei der Verwendung als Kaffeekapseln zu einem Aufbrechen der Kapseln in der entsprechenden Maschine beim Verbraucher führen.

Sowohl beim Ausstanzen aus der Behältermaterialbahn als auch beim Ausstanzen von gegebenenfalls vorhandenem Einlagenmaterial können zudem Stanzreste, welche üblicherweise als Spickel bezeichnet werden, in den Behältern verbleiben und/oder an diesen haften. Derartige Restbestandteile aus dem Produktionsprozess sind insbesondere im Lebensmittelbereich nicht tolerierbar.

Aus den genannten Gründen ist es erforderlich, derartige Behälter der Lebensmittelindustrie aus Aluminium einer Qualitätskontrolle zu unterziehen. Bis anhin wurden derartige Kontrollen stichprobenweise und meist manuell durchgeführt. Dies ist einerseits zu wenig zuverlässig und andererseits mit zu hohen Kosten verbunden. Ausserdem können derartige wie andere z.B. optische Methoden Schwachstellen im Gefüge nicht mit genügender Sicherheit identifizieren.

### DARSTELLUNG DER ERFINDUNG

Der Erfindung liegt demnach die Aufgabe zugrunde, ein konstruktiv einfaches, schnelles, verlässliches Verfahren zur Aussonderung von mangelhaften Formlingen aus elektrisch leitendem Material, d. h. beispielsweise Nahrungsmittelbehälter aus Aluminium, zur Verfügung zu stellen.

Die Lösung dieser Aufgabe wird durch den kennzeichnenden Teil des Hauptanspruches erreicht. Konkret handelt es sich bei den Formlingen um automatisch zugeführte, napfförmige Körper mit einem Boden, und diese Formlinge werden einer berührungslosen Wirbelstrommessung bei wenigstens zwei Messfrequenzen unterzogen, wobei zur Wirbelstrommessung der napfförmige Körper von seiner dem Boden zugewandten Seite her von wenigstens einem Wirbelstrommesskopf umfasst wird. Alternativ ist es möglich, den Formling gewissermassen nicht von aussen, sondern von innen auszumessen, indem der Wirbelstrommesskopf durch die dem Boden abgewandte Öffnung in den napfförmigen Körper eindringt. Eine derartige Messung ist selbstverständlich nur dann möglich, wenn der Behälter noch nicht gefüllt ist respektive noch nicht mit einem Deckel versehen ist. Bei Über- resp. Unterschreitung einer Toleranzabweichung von Referenzwerten wird dabei der gemessene Formling ausgesondert.

Der Kern der Erfindung besteht somit darin, zu erkennen, dass überraschenderweise auch napfförmige Körper mit hoher Geschwindigkeit unter Verwendung einer Wirbelstrommessung ausgemessen werden können, und auf Basis einer derartigen Wirbelstrommessung mangelhafte Formlinge automatisiert ausgesondert werden können. Es zeigt sich, dass bereits bei Messzeiten von wenigen hundert ms und bei wenigen Messfrequenzen genügend Daten vorhanden sind, um Gefügefehler oder Spickel zuverlässig zu erkennen und die entsprechenden Formlinge aus dem Prozess zu entfernen. So kann eine hochstehende Qualitätssicherung bei hoher Kadenz gewährleistet werden.

Eine erste bevorzugte Ausführungsform des erfindungsgemässen Verfahrens ist dadurch gekennzeichnet, dass die gleiche berührungslose Wirbelstrommessung an einem fehlerfreien Referenzformling vorgenommen wird, und dass die am Referenzformling ermittelten Messwerte als Referenzwerte verwendet werden. Die Ermittlung von (ohnehin meist nicht interessierenden) Absolutwerten als Referenzwerte kann so in eleganter Weise umgangen werden, ausserdem können beispielsweise temperaturbedingte oder ähnliche Drifts kompensiert werden. Die Messung an einem derartigen Referenzformling kann dabei entweder vor dem Laufen einer Serie geschehen, oder aber insbesondere bevorzugt während der gesamten Zeit, in welcher Formlinge ausgesondert werden sollen. Das Verfahren kann weiter verbessert werden, indem die Referenzwerte respektive Toleranzabweichungen über ein Teaching-Verfahren z. B. in Bezug auf temperaturindizierte Drifts oder im Sinne einer Gefügekompensation laufend oder abschnittsweise angepasst werden.

Eine weitere bevorzugte Ausführungsform zeichnet sich dadurch aus, dass es sich bei den Formlingen um Formlinge aus einem Umformprozess handelt. Beispielsweise kann es sich beim umgeformten Material um gegebenenfalls beschichtetes Aluminium handeln. Bevorzugt handelt es sich um konisch zum Boden zulaufende, becherförmige Formlinge, wie sie beispielsweise im Zusammenhang mit der Herstellung von Kaffeekapseln für die automatisierte Verwendung in Kaffeemaschinen Anwendung finden.

Bevorzugt werden weiterhin die Formlinge auf einem Taktband, insbesondere mit nach oben gerichtetem Boden, zugeführt, und es wird der Wirbelstrommesskopf in einer Stillstandphase des Taktbandes zunächst derart von der Seite des Bodens über den jeweiligen Formling geführt, dass dieser wenigstens teilweise in einer Kavität des Wirbelstrommesskopfes aufgenommen wird. Anschliessend wird die eigentliche Wirbelstrommessung vorgenommen, und zuletzt wird der Wirbelstrommesskopf wieder vom Formling entfernt, bevor das Taktband weiter transportiert. Zudem ist es möglich, die mit nach unten gerichtetem Boden bahnweise nebeneinander zugeführten Formlinge vor der Wirbelstrommessung insbesondere bevorzugt paarweise zu wenden und anschliessend mit nach oben gerichtetem Boden, gegebenenfalls bei gleichzeitiger Spreizung, dem Wirbelstrommesskopf respektive der Vielzahl von parallelen Wirbelstrommessköpfen zuzuführen. Durch die parallele Führung von Bahnen von Formlingen kann eine sehr hohe Geschwindigkeit des Prüfprozesses realisiert werden, und insbesondere kann der Prozess unmittelbar anschliessend an den Herstellungsprozess nachgeschaltet werden.

Eine weitere bevorzugte Ausführungsform ist dadurch gekennzeichnet, dass die Formlinge insbesondere bevorzugt bahnweise nebeneinander auf Bändern taktweise zugeführt werden, und nach der Wirbelstrommessung über einen Aufstapel-Schieber nach deren Zuführung über ein Transportband nur die mangelfreien Formlinge insbesondere bevorzugt nach oben gestapelt werden, während mangelhafte Formlinge über das Laufende des Transportbandes ausgesondert werden. Die Aussonderung kann so effizient und einfach realisiert werden. Die ausgesonderten Formlinge fallen anschliessend in einen entsprechenden Ausschussbehälter.

Es zeigt sich, dass die Wirbelstrommessung sinnvoller Weise nacheinander bei wenigstens 3, bevorzugt bei wenigstens 5 diskreten unterschiedlichen Frequenzen im Bereich von 25 Hz bis 25 kHz, bevorzugt im Bereich von 250 Hz oder 600 Hz bis 25 kHz durchgeführt werden kann, wobei insbesondere eine Messzeit im Bereich von 100 - 200 ms Anwendung findet.

Weiterhin betrifft die vorliegende Erfindung eine Vorrichtung zur Durchführung eines Verfahrens, wie es oben beschrieben wurde. Die Vorrichtung ist dabei bevorzugt gekennzeichnet durch wenigstens zwei Wirbelstrommessköpfe mit einer Kavität, welche den Formling bei der Messung wenigstens teilweise umschliesst, und welche Wirbelstrommessköpfe bevorzugt wenigstens eine den Formling umlaufend umfassende Messspule aufweisen, wobei wenigstens einer der Wirbelstrommessköpfe für die Wirbelstrommessung an einem fehlerfreien Referenzformling zur Ermittlung der Referenzwerte vorgesehen ist, und wenigstens ein zweiter der Wirbelstrommessköpfe für die zu überprüfenden Formlinge vorgesehen ist.

Eine bevorzugte Ausführungsform der Vorrichtung ist dadurch gekennzeichnet, dass Bänder vorhanden sind, auf welchen die Formlinge bahnweise nebeneinander taktweise zugeführt werden, und dass eine der Anzahl der Bahnen entsprechende Zahl von Wirbelstrommessköpfen angeordnet ist, welche auf unterschiedlichen Bahnen zugeführte Formlinge ausmisst.

Weitere bevorzugte Ausführungsformen der Erfindung sind in den abhängigen Ansprüchen beschrieben.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: eine seitliche Ansicht einer Vorrichtung zur Qualitätsüberprüfung von Kapseln ;
- Fig. 2: eine Ansicht von oben auf die Vorrichtung gem. Fig. 1 ;
- Fig. 3: eine Seitenansicht des Bereichs der Vorrichtung der Saugrad-Einheit gem. Fig. 1;
- Fig. 4: eine Seitenansicht des Bereichs der Wirbelstrom-Einheit gem. Fig. 1 ;
- Fig. 5: a) eine Seitenansicht des Transportbandes zum Aufstapeln gem. Fig. 1 inklusive Aufstapel-Schieber, b) einen Schnitt durch die Antriebsrolle für das Transportband, c) eine Aufsicht auf zwei nebeneinander angeordnete Transportbänder zum Aufstapeln;
- Fig. 6: eine Seitenansicht des Aufstaplers mit Wendevorrichtung; und
- Fig. 7: eine Ansicht von oben auf den Aufstapler gem. Fig. 6.

### WEGE ZUR AUSFÜHRUNG DER ERFINDUNG

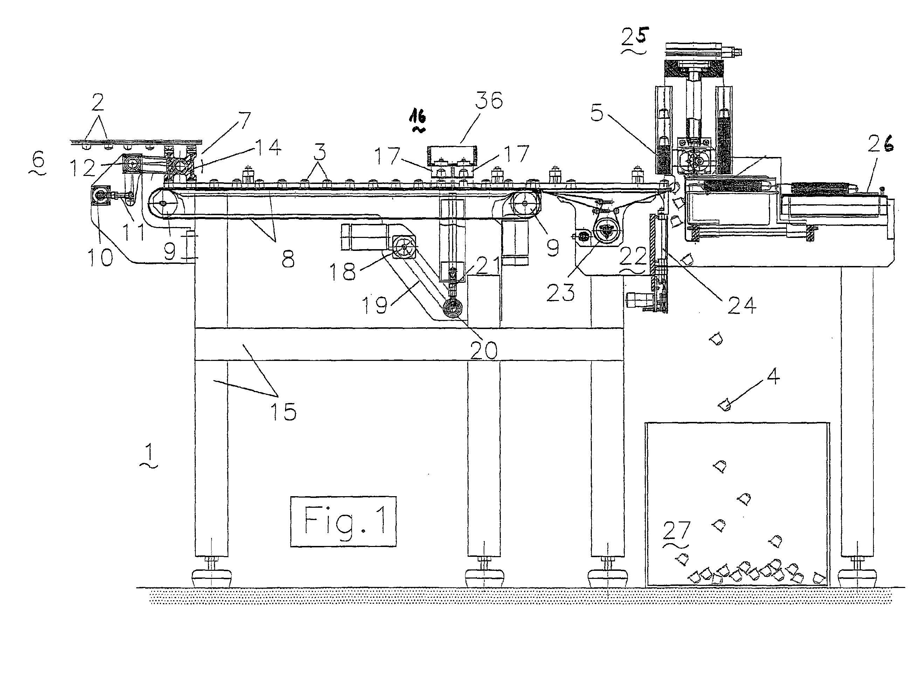

Fig. 1 zeigt eine seitliche Ansicht einer Vorrichtung 1 zur Qualitätsüberprüfung von Kaffeekapseln. Eine derartige Vorrichtung 1 kann, muss aber nicht, direkt anschliessend an die eigentliche Produktion von Kapseln angeordnet sein.

In diesem Fall werden die zugeführten Kapseln 2 von Links der Vorrichtung 1 zugeführt. Sie sind dabei mit ihrer Öffnung nach oben ausgerichtet, und verfügen optional auf ihrer Innenseite bereits über einen an Boden angeordneten Filter (kreisförmiger Einsatz z.B. aus Vlies). Die Kapseln 2 sind becherförmig ausgebildet, wobei an der der Öffnung zugewandten Seite ein Bördelrand vorhanden ist und wobei die Seitenwände unter einem steilen Winkel konisch zum Boden zulaufen, und der Boden seitlich mit einem flacheren Winkel konisch zulaufend ausgebildet ist sowie unten einen horizontalen kreisförmigen Abschnitt aufweist.

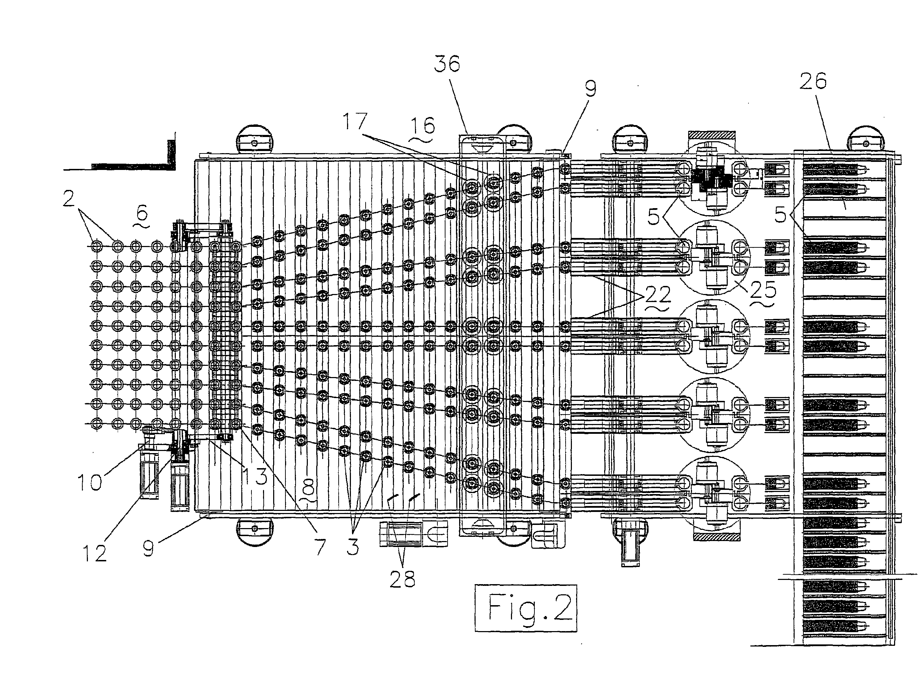

Wie aus Fig. 2, welche eine Ansicht von oben auf die Vorrichtung gem. Fig. 1 darstellt, ersichtlich wird, werden die Kapseln 2 durch eine Zuführung 6 z.B. vom Filterapplikator in mehreren Bahnen nebeneinander zugeführt. Dabei werden 10 Bahnen parallel und synchron gefahren.

Die derart parallel zugeführten Bahnen von Kapseln werden zunächst in einer Wendeeinheit derart gewendet, dass anschliessend der Boden nach oben gerichtet ist. Dies geschieht in der Saugrad-Einheit 7. Diese verfügt über ein Saugrad 14, welches in der Lage ist, jeweils zwei Kapseln 2 gleichzeitig von der Zuführung 6 zu übernehmen, und durch eine Drehung auf ein nachgeschaltetes Transporttaktband 8 aufzulegen. Mit dem Saugrad 14 können entsprechend pro Drehung um 180° 20 Kapseln gleichzeitig von der Zuführung 6 auf das Transporttaktband 8 überführt werden.

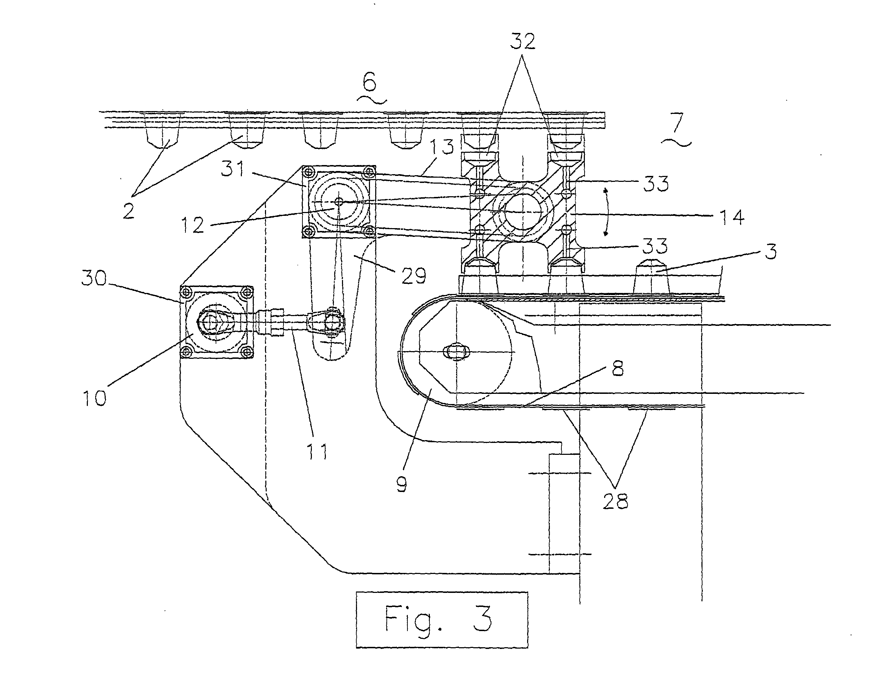

Das Saugrad 14 respektive die gesamte Saugrad-Einheit 7 ist in Fig. 3 im Detail dargestellt. Die Einheit verfügt einerseits über einen Mechanismus zur Erzeugung einer auf- ab-Bewegung des Saugrades 14. Andererseits ist ein Mechanismus zur Drehung des Saugrades 14 um eine Achse senkrecht zur Förderrichtung der Kapseln 2 vorgesehen.

Die auf-ab-Bewegung wird über einen Hebel bewirkt, indem ein Motor 30, welcher eine Kurbelwelle 10 für das Saugrad 14 antreibt, über eine Pleuelstange 11 an einem Hebelarm 29 angeschlagen ist. Der Hebelarm 29 ist um die Achse der Welle 12 für das Saugrad 14 drehbar gelagert, und die Rotation der Kurbelwelle 10 bewirkt entsprechend eine auf-ab-Bewegung des Saugrades 14.

Die Drehbarkeit des Saugrades 14 wird über einen weiteren Motor 31 gewährleistet, welcher eine Welle 12 antreibt. Diese Welle 12 ist über einen Riemen 13 mit einer entsprechenden, am Saugrad 14 angeordneten Rolle verbunden, und es kann über diesen Motor 31 das Saugrad um seine Drehachse gedreht werden.

In der oberen Position greift das Saugrad 14 die von oben ankommenden Kapseln 2 ab.

Jeweils zwei hintereinander angeordnete Kapseln 2 werden in ihrem Bodenbereich von im Saugrad 14 vorhandenen Hohlräumen 32 umgriffen, und anschliessend werden diese Hohlräume mit einem Unterdruck über Unterdruckkanäle 33 beaufschlagt. So werden die 2 hintereinander angeordneten Kapseln 2 am Saugrad 14 fixiert.

In einem nächsten Schritt nach der Fixierung wird das Saugrad 14 leicht nach oben oder unten bewegt, sodass die Kapseln 2 von der Zuführung 6 freigegeben werden. Anschliessend wird das Saugrad 14 um 180° gewendet, sodass die beiden am Saugrad 14 fixierten Kapseln 2 danach mit ihrer Öffnung nach unten über dem Transporttaktband 8 angeordnet sind. Sie werden dann durch eine Abwärtsbewegung zwischen auf dem Transporttaktband 8 vorhandenen Querbändem 28 in den dazwischen vorhandenen Vertiefungen abgesetzt, sodass die Kapseln auf dem Transporttaktband 8 ohne in Förderrichtung verschoben zu werden in seitlicher Richtung ausgelenkt werden können (vgl. weiter unten).

Anschliessend wird nach Lösen des Unterdrucks in den Kanälen 33 und entsprechendes Freigeben der Kapseln das Saugrad 14 durch Bewegung des Hebels 29 wieder nach oben bewegt und so die auf dem Band 8 befindlichen Kapseln 3 wenigstens so weit freigegeben, dass das Transporttaktband 8 in einem nächsten Schritt die Kapseln befördern kann. Das Saugrad 14 setzt entsprechend jeweils zwei auf einer Bahn befindliche Kapseln 2 auf das Transporttaktband 8 ab. Da zehn derartige Bahnen nebeneinander angeordnet sind, werden entsprechend wie bereits erwähnt pro Arbeitstakt des Saugrades 20 Kapseln umgelegt.

Die auf dem Transporttaktband 8 vergleichsweise dicht nebeneinander durch das Saugrad 14 positionierten Kapseln 3 müssen, um anschliessend der Messung in der Wirbelstrom-Einheit 16 zugänglich zu sein, und um nach der Kontrolle gestapelt und umgelegt werden zu können, gespreizt werden. Dies geschieht, wie in Fig. 2 ersichtlich, indem die Kapseln 3 bahnweise bei ihrem Transport auf die Wirbelstrom-Einheit 16 respektive auf die Aufstapler hin auf dem Transporttaktband 8 seitlich auseinander geschoben werden. Die Spreizung wird durch Führungsschienen (nicht dargestellt) bewirkt, durch welche die Kapseln 3 auf ihren Transport ausgelenkt werden. Da die Kapseln 3 zwischen den Querbändern 28 in Bezug auf die Vorwärtsbewegung fixiert sind, können so die einzelnen Bahnen von Kapseln 3 kontrolliert gespreizt werden.

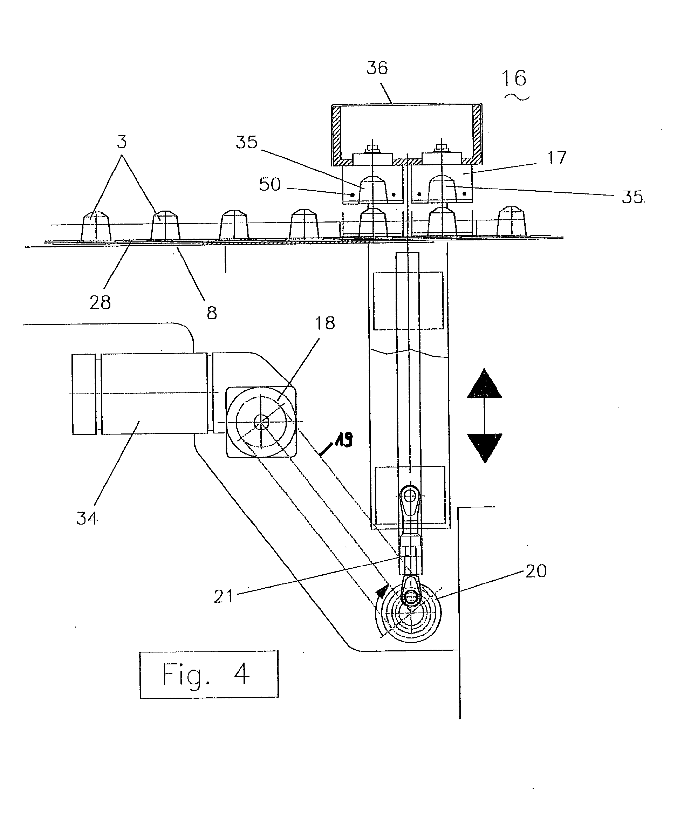

Die Wirbelstrom-Einheit 16 ist in Fig. 4 im Detail dargestellt. Im vorliegenden Ausführungsbeispiel werden jeweils pro Bahn gleichzeitig 2 Kapseln 3, welche hintereinander angeordnet sind, durch die Wirbelstrom-Einheit 16 gemessen. Alternativ ist es möglich, die Messung nicht im Doppeltakt, in welchem die Kapseln 3 von der Saugrad-Einheit 7 auf das Transporttaktband 8 gelegt werden, durchzuführen, sondern im Einzeltakt, d. h. mit doppelter Frequenz jeweils nur eine Kapsel 3 aufs Mal auszumessen.

Die Wirbelstrom-Einheit 16 wird im Takt über die zugeführten Kapseln 3 bewegt. Die Einheit 16 verfügt entsprechend über jeweils wenigstens einen Wirbelstrom-Messkopf 17, welcher eine Kavität 35 besitzt, welche im wesentlichen der unteren Aussenform der Kapseln entspricht. In jedem Messkopf 17 ist dabei eine Prüfspule angeordnet, welche kreisförmig die Kapsel umgibt. Es ist auch möglich, mehrere Prüfspulen in einem Messkopf vorzusehen. Die einzelnen Messköpfe 17 sind von einer Querschiene 36 (vgl. auch Fig. 2) getragen, sodass sämtliche Messköpfe 17 für die nebeneinander geführten Bahnen von Kapseln 3 gleichzeitig und unter Verwendung von nur einem Bewegungsmechanismus jeweils zum Messvorgang über die Kapseln gestülpt werden können.

Dieser Bewegungsmechanismus ist in Fig. 4 dargestellt. Es ist ein Motor 34 angeordnet, welcher eine Welle 18 für die Wirbelstrom-Einheit 16 antreibt. Diese Welle ist über einen Riemen 19 mit einer Kurbelwelle 20 verbunden. An dieser Kurbelwelle 20 ist exzentrisch eine Pleuelstange 21 befestigt, welche anschliessend die die Schiene 36 tragende Einheit auf und ab zu bewegen in der Lage ist (vgl. Pfeil). Im Fall einer Doppelmessung wie in Fig. 4 dargestellt bewegt das Band 8 jeweils 2 zu messende Kapseln 3 unter die Einheit 16, diese wird anschliessend in der Stillstandphase des Bandes 8 auf die Kapseln 3 vermittels der oben beschriebenen Mechanik abgesenkt und die Wirbelstrommessung vorgenommen. Nach der Messung, welche typischerweise ca. 150 ms beansprucht, und bei welcher 5 Frequenzen (zum Beispiel 600 Herz, 1.6 kHz,4 kHz, 10 kHz, 25 kHz) sukzessive ausgemessen werden, wird der Messkopf angehoben und das Band 8 weitergeführt. In Bezug auf die apparative Ausstattung ist es beispielsweise möglich, ein Gerät des Typs eddyliner ®P der Firma IBG, Ebermannstadt, DE, zu verwenden.

Wie bereits erwähnt, sind die eigentlichen Schwellenwerte respektive insbesondere die Referenzwerte von guten Kapseln eigentlich nicht von Interesse, und ausserdem schwanken diese Werte u. U. von Produktionsserie zur Produktionsserie auf Grund von unterschiedlichen Ausgangsmaterialien, Produktionsbedingungen etc.. Ausserdem können die Referenzwerte Drifts oder sonstigen Schwankungen unterworfen sein.

Entsprechend wird im vorliegenden Fall die an den Kapseln 3 vorgenommene Messung nicht mit Absolutwerten verglichen, sondern es ist ausserdem wenigstens eine (in den Figuren nicht dargestellte) Referenzvorrichtung vorhanden, in welcher eine Referenz-Kapsel ohne Mangel (kein Gefügefehler, kein Spickel) ausgemessen wird. Es kann nun in dieser Referenzvorrichtung entweder vor Beginn einer Serie eine Mehrzahl von Kalibrierteilen (Kaffeekapseln) ausgemessen werden, und die entsprechenden Referenzwerte festgelegt werden. Zusammen mit vorgegebenen Toleranzabweichungen können anschliessend Teile ausgesondert werden, welche nicht in einem Fenster Referenzwert +/-Toleranzwert liegen.

Alternativ ist es möglich, diese Referenzmessung laufend vorzunehmen, was den Vorteil aufweist, dass beispielsweise Temperaturdrifts, welche sich auf Grund des Vornehmens der Messung ergeben, automatisch kompensiert werden. Zusätzlich können Mittelungsverfahren verwendet werden, welche bereits vorgenommene Messungen in die Bestimmung der Referenzwerte einbeziehen (zum Beispiel so genannte Teaching-Verfahren).

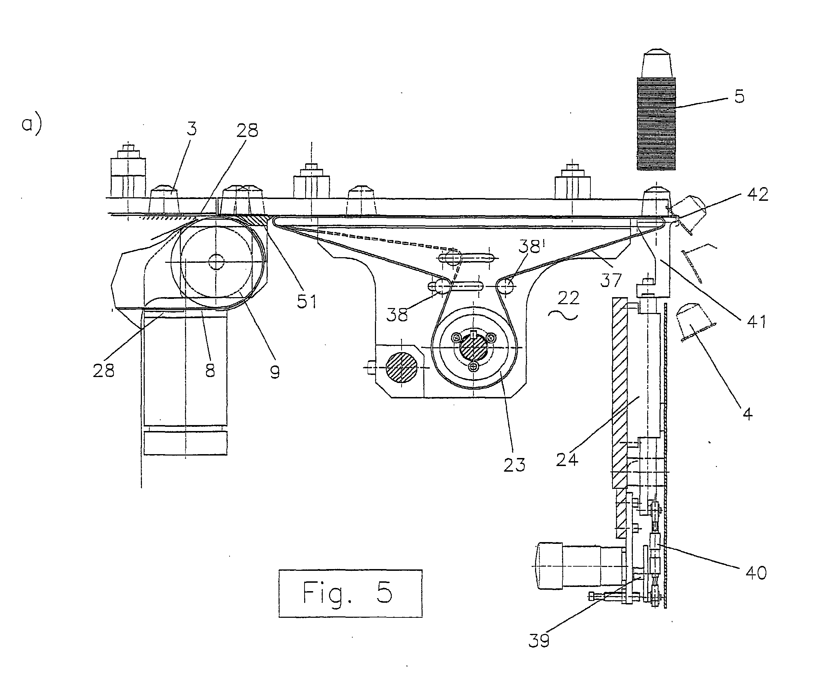

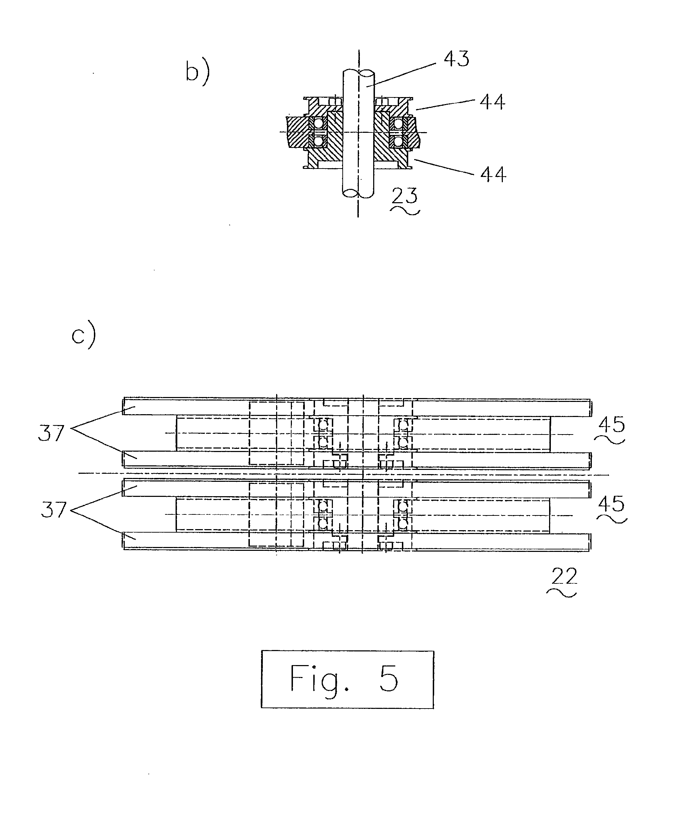

Hinter der Wirbelstrom-Einheit 16 werden die ausgemessenen Kapseln 3 vom Transporttaktband 8 über eine Totplatte 51 an ein kontinuierlich laufendes Transportband 22 übergeben. Dieses ist im Detail in Fig. 5 dargestellt. Es handelt sich dabei pro Bahn jeweils um ein Paar von Bändern 37, welche die Kapsel 3 nur im Randbereich von unten stützen. Zwischen den beiden Bändern 37 verbleibt entsprechend ein Zwischenraum 45. Die beiden Bänder 37 werden von einer Antriebsrolle 23, welche in einem Schnitt in Fig. 5b) dargestellt ist, angetrieben, wobei jeweils die Bänder 37 in Nuten 44 geführt werden. Die Bänder 37 werden über Führungsrollen 38 in gespanntem Zustand gehalten.

Unter anderem entscheidend an diesem Transportband 22 ist der Zwischenraum 45. In diesen Zwischenraum greift nämlich der obere Teil 41 des Aufstapel-Schiebers 24 ein. Der Aufstapelschieber 24 umfasst seinerseits einen Motor 39 mit einer Kurbelwelle 39, welche eine Pleuelstange 40 bewegt und eine auf ab Bewegung des Aufstapelschiebers 24 bewirkt. Erreicht nun eine fehlerfreie Kapsel 3 am Ende (in Fig. 5a) rechts) des Transportbandes 22 die am oberen Teil 41 des Aufstapel-Schiebers 24 angeordnete Nase 42, so wird die Weiterbewegung der Kapsel 3 verhindert. In diesem Moment wird der Aufstapel-Schieber 24 nach oben bewegt und die fehlerfreie Kapsel 3 von unten in den Stapel 5 eingeschoben.

Handelt es sich bei der am rechten Ende des Transportbandes 22 ankommenden Kapsel 3 um eine fehlerfreie Kapsel, so wird der Aufstapel-Schieber 24 leicht nach unten abgesetzt, sodass die Kapsel nicht von der Nase 42 gebremst wird und somit über den rechten äusseren Rand des Transportbands 22 hinausfällt. Die so ausgesonderten Kapseln 4 werden anschliessend, wie aus Fig. 1 ersichtlich wird, in einem Sammelbehälter 27 aufgefangen.

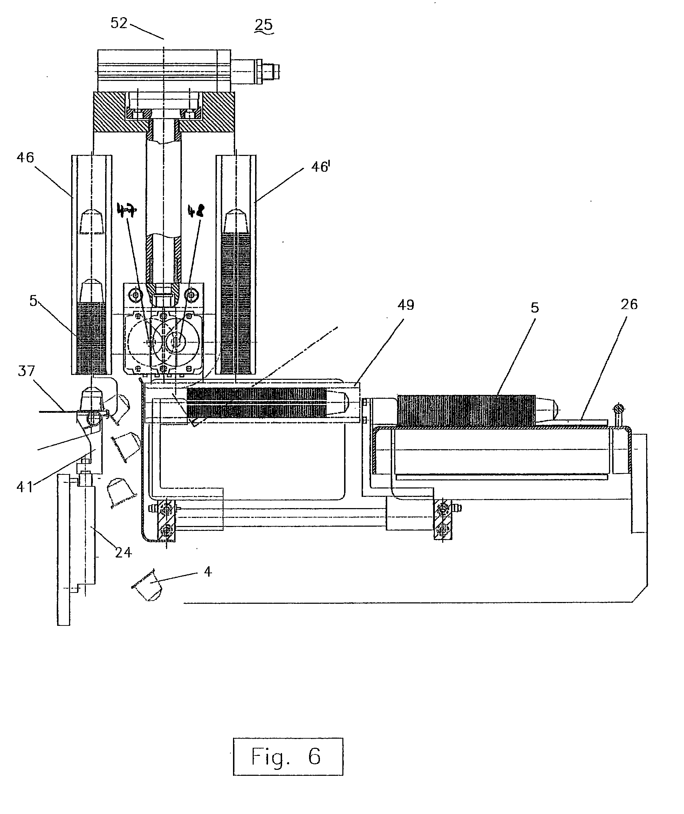

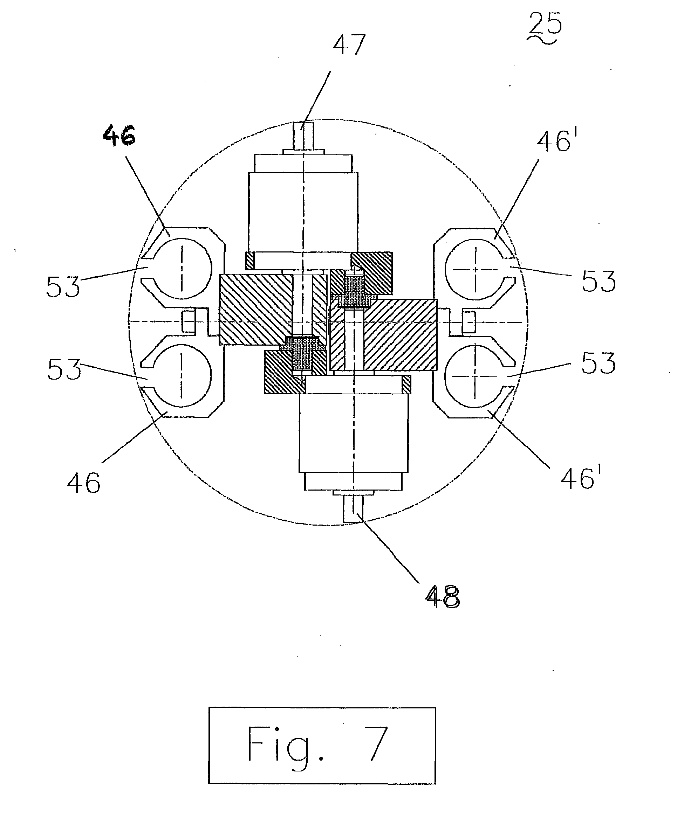

Um die in den Stapel 5 geführten fehlerfreien Kapseln 3 als Stapel 5 kontrolliert abzuführen, ist ein Aufstapler 25 mit Wendevorrichtung angeordnet. Dieser ist im Detail in Fig. 6 sowie in Fig. 7 dargestellt. Der Stapel 5 zur jeweiligen Bahn von Kapseln 3 wird zunächst in einem Rohr 46 geführt. Ist dieses Rohr 46 in genügendem Masse mit Kapseln befüllt, so wird die Einheit 25 um die Achse 52 um 180° gedreht. Dabei werden, wie aus Fig. 7 ersichtlich ist, zwei Stapel 5 vom Transportband 22 weggedreht, und dafür sind anschliessend die beiden in der Einheit 25 gegenüber angeordneten Rohre 46 dem Transportband 22 zugewandt und können befüllt werden. Während nun diese zweiten Rohre befüllt werden, können die dem Transportband 22 abgewandten Rohre 46', wie in Fig. 6 dargestellt, um die Achse 48 abgekippt werden, und der Stapel 5 kann anschliessend aus dem abgekippten Rohr 49 heraus geschoben werden (dazu können die seitliche Schlitze 53 in den Rohren 46 in Fig. 7 verwendet werden). Die Stapel werden so auf ein Stapel-Sammelband 26 befördert, und von diesem beispielsweise in Fig. 2 nach unten abgeführt.

Da zwischen jeweils 2 Stapeln von benachbarten Aufstaplern 25 gewissermassen zwei Plätze auf dem Band 26 frei bleiben, kann das Band 26 zunächst nur um 2 Positionen verschoben werden, und erst wenn alle hinter den Aufstaplern 25 angeordneten Positionen gefüllt sind, das Band um eine ganze Breite vorwärts bewegt werden.

Typische Zeiten für das beschriebene Verfahren können wie folgt festgelegt werden. Beim beschriebenen Verfahren wird jeweils nur eine Kapsel durch die Messvorrichtung ausgemessen, und nicht zwei, wie oben geschildert.

### Absetzen der Kapseln 2 von der Zuführung 6 auf das Transporttaktband 8:

Die Zuführung 6 senkt sich in ca. 250 ms auf das Saugrad 14 ab. Anschliessend gibt es eine Rastzeit von ca. 360 ms, das Saugrad 14 wird dann innerhalb von ca. 160 ms gedreht, wobei es in den letzten 125 ms auch abgesenkt wird. Innerhalb von ca. 10 ms werden die Kapseln vom Saugrad 14 freigegeben und abgesetzt, anschliessend wird das Saugrad 14 wiederum innerhalb von 125 ms angehoben.

### Bewegung von Transporttaktband 8 und Wirbelstrom-Einheit 16:

Unmittelbar auf das Absetzen von 2 Kapseln auf das Band 8 folgen folgende Schritte: Zuerst wird innerhalb von 170 ms das Transporttaktband 8 um eine Position (eine Kapsel) vorwärts bewegt. Die Wirbelstrom-Einheit 16 wird innerhalb von ca. 150 ms auf die Kapsel 3 abgesenkt, anschliessend wird die Wirbelstrom-Messung während ca. 150 ms durchgeführt, und darauf der Messkopf innerhalb von ca. 150 ms angehoben. Dann wird innerhalb von 170 ms das Transporttaktband 8 um eine Position (eine Kapsel) vorwärts bewegt. Daraufhin wird die Wirbelstrom-Einheit 16 wiederum innerhalb von ca. 150 ms auf die nächste Kapsel 3 abgesenkt, anschliessend wird die Wirbelstrom-Messung während ca. 150 ms durchgeführt, und darauf der Messkopf innerhalb von ca. 150 ms angehoben.

### BEZUGSZEICHENLISTE

- 1: Vorrichtung zur Qualitätsüberprüfung
- 2: zugeführte Kapseln
- 3: Kapseln auf Transporttaktband
- 4: ausgesonderte Kapseln
- 5: Kapselstapel
- 6: Zuführung von Filterapplikator
- 7: Saugrad-Einheit
- 8: Transporttaktband
- 9: Rolle für 8
- 10: Kurbelwelle für Saugrad (Auf-Ab-Bewegung)
- 11: Pleuelstange
- 12: Welle für Saugrad (Rotationsbewegung)
- 13: Riemen
- 14: Saugrad
- 15: Untergestell
- 16: Wirbelstrom-Einheit
- 17: Wirbelstrom-Messkopf
- 18: Welle für Wirbelstrom-Einheit
- 19: Riemen
- 20: Kurbelwelle für Wirbelstrom-Einheit
- 21: Pleuelstange
- 22: Transportband zum Aufstapeln
- 23: Antriebsrolle für Transportband
- 24: Aufstapel-Schieber
- 25: Aufstapler mit Wendevorrichtung
- 26: Stapel-Sammelband
- 27: Behälter für ausgesonderte Kapseln
- 28: Querbänder
- 29: Hebelarm
- 30: Motor
- 31: Motor
- 32: Hohlraum für Kapselboden
- 33: Unterdruckkanal
- 34: Motor
- 35: Kavität für Wirbelstrommessung
- 36: Querschiene von 16
- 37: Band
- 38: Führungsrolle
- 39: Kurbelwelle
- 40: Pleuelstange
- 41: oberer Teil von 24
- 42: Nase
- 43: Achse
- 44: Nut für 37
- 45: Zwischenraum zwischen 37
- 46: Rohr für 5
- 47: Kippachse für 46
- 48: Kippachse für 46'
- 49: abgekipptes Rohr 46'
- 50: Prüfspule
- 51: Totplatte
- 52: Drehachse von 25

## Patentansprüche

1. Verfahren zur Aussonderung von mangelhaften Formlingen (4) aus elektrisch leitendem Material,
**dadurch gekennzeichnet, dass**
es sich bei den Formlingen (2-4) um automatisch zugeführte, napfförmige Körper mit einem Boden handelt, und dass
diese Formlinge (2,3) einer berührungslosen Wirbelstrommessung bei wenigstens zwei Messfrequenzen unterzogen werden, wobei zur Wirbelstrommessung der napfförmige Körper (2-4) entweder von seiner dem
Boden zugewandten Seite her von wenigstens einem Wirbelstrommesskopf (17) umfasst wird, oder der Wirbelstrommesskopf durch die dem Boden abgewandte Öffnung in den napfförmigen Körper (2-4) eindringt, und wobei bei Über- resp. Unterschreitung einer Toleranzabweichung von Referenzwerten der gemessene Formling (2-4) ausgesondert wird.

2. Verfahren nach Anspruch 1, **dadurch gekennzeichnet, dass** die gleiche berührungslose Wirbelstrommessung an einem fehlerfreien Referenzformling vorgenommen wird, und dass die am Referenzformling ermittelten Messwerte als Referenzwerte verwendet werden.

3. Verfahren nach Anspruch 2, **dadurch gekennzeichnet, dass** die Referenzwerte respektive Toleranzabweichungen über ein Teaching-Verfahren z. B. in Bezug auf temperaturindizierte Drifts oder im Sinne einer Gefügekompensation laufend oder abschnittsweise angepasst werden.

4. Verfahren nach einem der vorhergehenden Ansprüche, **dadurch gekennzeichnet, dass** es sich bei den Formlingen (2-4) um Formlinge aus einem Umformprozess bevorzugt auf Basis von Aluminium handelt, wobei es sich bevorzugt um konisch zum Boden zulaufende becherförmige Formlinge (2-4), insbesondere bevorzugt um Kaffeekapseln handelt.

5. Verfahren nach einem der vorhergehenden Ansprüche, **dadurch gekennzeichnet, dass** die Wirbelstrommessung derart ausgelegt ist, dass Formlinge mit mangelhaftem Gefüge und/oder Formlinge mit Spickeln ausgesondert werden können.

6. Verfahren nach einem der vorhergehenden Ansprüche, **dadurch gekennzeichnet, dass** die Formlinge (3) auf einem Taktband (8), insbesondere mit nach oben gerichtetem Boden, zugeführt werden, und dass der Wirbelstrommesskopf (17) in einer Stillstandphase des Taktbandes (8) zunächst derart von der Seite des Bodens über den jeweiligen Formling (3) geführt wird, dass dieser wenigstens teilweise in einer Kavität (35) des Wirbelstrommesskopfes (17) aufgenommen wird, anschliessend die Wirbelstrommessung vorgenommen wird, und zuletzt der Wirbelstrommesskopf (17) wieder vom Formling (3) entfernt wird, bevor das Taktband (8) weiter transportiert.

7. Verfahren nach einem der vorhergehenden Ansprüche, **dadurch gekennzeichnet, dass** mit nach unten gerichtetem Boden bahnweise nebeneinander zugeführte Formlinge (2) vor der Wirbelstrommessung insbesondere bevorzugt paarweise gewendet und anschliessend mit nach oben gerichtetem Boden, gegebenenfalls bei gleichzeitiger Spreizung, dem Wirbelstrommesskopf (17) zugeführt werden.

8. Verfahren nach einem der vorhergehenden Ansprüche, **dadurch gekennzeichnet, dass** die Formlinge (2,3) insbesondere bevorzugt bahnweise nebeneinander auf Bändern (8) taktweise zugeführt werden, und nach der Wirbelstrommessung über einen Aufstapel-Schieber (24) nach deren Zuführung über ein Transportband (22) nur die mangelfreien Formlinge insbesondere bevorzugt nach oben gestapelt werden, während mangelhafte Formlinge (4) über das Laufende des Transportbandes (22) ausgesondert werden.

9. Verfahren nach einem der vorhergehenden Ansprüche, **dadurch gekennzeichnet, dass** die Wirbelstrommessung bei wenigstens 3, bevorzugt bei wenigstens 5 diskreten unterschiedlichen Frequenzen im Bereich von 25 Hz bis 25 kHz, bevorzugt im Bereich von 250 Hz bis 25 kHz durchgeführt wird, wobei insbesondere eine Messzeit im Bereich von 100 - 200 ms Anwendung findet.

10. Vorrichtung zur Durchführung eines Verfahrens nach einem der Ansprüche 1-9, insbesondere bevorzugt **gekennzeichnet durch** wenigstens zwei Wirbelstrommessköpfe (17) mit einer Kavität (35), welche den Formling (2-4) bei der Messung umschliesst, und welche Wirbelstrommessköpfe (17) wenigstens eine den Formling (2-4) umlaufend umfassende Messspule aufweisen, wobei wenigstens einer der Wirbelstrommessköpfe (17) für die Wirbelstrommessung an einem fehlerfreien Referenzformling zur Ermittlung der Referenzwerte vorgesehen ist, und wenigstens ein zweiter der Wirbelstrommessköpfe (17) für die zu überprüfenden Formlinge (2,3) vorgesehen ist.

11. Vorrichtung nach Anspruch 10, **dadurch gekennzeichnet, dass** Bändern (8) vorhanden sind, auf welchen die Formlinge (2,3) bahnweise nebeneinander taktweise zugeführt werden, und dass eine der Anzahl der Bahnen entsprechende Zahl von Wirbelstrommessköpfen (17) angeordnet ist, welche auf unterschiedlichen Bahnen zugeführte Formlinge (2,3) ausmisst.
